(19) Europäisches Patentamt
European Patent Office
Office européen des brevets

(11) **EP 1 269 762 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**11.04.2018 Patentblatt 2018/15**

(45) Hinweis auf die Patenterteilung:
**05.07.2006 Patentblatt 2006/27**

(21) Anmeldenummer: **01925492.9**

(22) Anmeldetag: **20.03.2001**

(51) Int Cl.:
***H04N 17/00*** (2006.01)   ***G05B 19/4061*** (2006.01)

(86) Internationale Anmeldenummer:
**PCT/EP2001/003180**

(87) Internationale Veröffentlichungsnummer:
**WO 2001/078411 (18.10.2001 Gazette 2001/42)**

(54) **SCHUTZVORRICHTUNG ZUM ABSICHERN EINES GEFAHRENBEREICHS SOWIE VERFAHREN ZUM ÜBERPRÜFEN DER FUNKTIONSSICHERHEIT EINER SOLCHEN**

PROTECTIVE DEVICE FOR SAFEGUARDING A DANGEROUS AREA AND METHOD FOR VERIFYING THE FUNCTIONAL RELIABILITY OF SUCH A DEVICE

DISPOSITIF DE SECURITE SERVANT A EMPECHER L'ACCES A UNE ZONE DANGEREUSE ET PROCEDE POUR VERIFIER LA SECURITE DE FONCTIONNEMENT D'UN TEL DISPOSITIF

(84) Benannte Vertragsstaaten:
**AT BE CH CY DE DK ES FI FR GB GR IE IT LI LU MC NL PT SE TR**

(30) Priorität: **07.04.2000 DE 10017333**
**07.04.2000 DE 10017344**

(43) Veröffentlichungstag der Anmeldung:
**02.01.2003 Patentblatt 2003/01**

(73) Patentinhaber: **Pilz GmbH & Co. KG**
**73760 Ostfildern (DE)**

(72) Erfinder:
• **DÖTTLING, Dietmar**
**70771 Leinfelden-Echterdingen (DE)**
• **FUCHS, Oliver**
**73732 Esslingen (DE)**
• **SÄLZER, Mathias**
**73262 Reichenbach (DE)**
• **WENDLER, Martin**
**70599 Stutgart (DE)**
• **WEISHAAR, Christoph**
**71384 Weinstadt (DE)**

(74) Vertreter: **Witte, Weller & Partner Patentanwälte mbB**
**Postfach 10 54 62**
**70047 Stuttgart (DE)**

(56) Entgegenhaltungen:
**EP-A- 0 494 308    US-A- 4 639 591**
**US-A- 4 991 007**

• **PATENT ABSTRACTS OF JAPAN vol. 1998, no. 14, 31. Dezember 1998 (1998-12-31) & JP 10 262174 A (TOSHIBA CORP), 29. September 1998 (1998-09-29)**

EP 1 269 762 B2

**Beschreibung**

Die vorliegende Erfindung betrifft ein Verfahren zum Überprüfen der Funktionssicherheit eines Bildsensors.

Eine Schutzvorrichtung sowie ein solches Verfahren sind aus der EP 0 902 402 A2 bekannt.

In dieser Druckschrift ist eine als Überwachungssystem bezeichnete Schutzvorrichtung beschrieben, die mindestens eine digitale Kamera mit einem Kameramodul und einem A/D-Wandler sowie eine Auswerteeinheit mit einem Mikroprozessor und einem Bildspeicher aufweist. In der Auswerteeinheit werden Grauwerte eines aktuell aufgenommenen Objektbildes mit den Grauwerten eines Referenzbildes pixelweise verglichen. Auf der Basis dieses Vergleichs kann die Schutzvorrichtung erkennen, ob sich in dem überwachten Bereich ein gefährlicher Fremdgegenstand befindet. In Abhängigkeit davon wird dann das Schließen der Türen eines Aufzugs verhindert.

Da ein Versagen der Schutzvorrichtung aufgrund eines Fehlers eine für Menschen oder materielle Werte gefährliche Situation zur Folge haben kann, ist bei der bekannten Schutzvorrichtung vorgesehen, daß die Auswerteeinheit die Funktionsfähigkeit der Kamera überwacht. Hierzu werden verschiedene Verfahren vorgeschlagen, nämlich die Überprüfung auf das Vorhandensein eines Synchronsignals der Kamera, die Überprüfung absoluter und/oder relativer Werte der Helligkeit, das periodische Einspeisen eines Testbildes an einen Videomultiplexereingang der Kamera sowie das gezielte Blenden der Kamera mit Hilfe einer Leuchtdiode, wobei das in diesem Fall von der Kamera aufgenommene Bildmuster mit einem Referenzmuster verglichen wird.

Mit Hilfe dieser Verfahren ist es grundsätzlich möglich, eine einfache Überprüfung der Schutzvorrichtung auf Funktionssicherheit durchzuführen. Die genannten Verfahren sind jedoch in der beschriebenen Form nicht ausreichend, um die Anforderungen der höheren Sicherheitskategorien der europäischen Norm EN 954-1, insbesondere die Anforderungen der Kategorien 3 und 4, zu erfüllen. So kann anhand der Überwachung eines Synchronsignals der Kamera beispielsweise nicht festgestellt werden, ob einzelne Bildpunkte (Pixel) des in der Kamera verwendeten Bildsensors fehlerhaft sind. Das Einspeisen von Testbildern und das Blenden der Kamera mit Hilfe einer Leuchtdiode besitzen demgegenüber den Nachteil, daß die Schutzvorrichtung während der Zeit der Funktionsüberprüfung "blind" ist. Eine zeitlich lückenlose Absicherung eines Gefahrenbereichs ist somit nicht möglich.

In DE 295 20 980 U1 ist eine Schutzvorrichtung offenbart, bei der ein Testmuster zum Überprüfen der Funktionssicherheit entweder im Erfassungsbereich ständig angeordnet ist, mit einem Projektor in den Erfassungsbereich projiziert wird oder mit einem LCD im Strahlengang der Kamera erzeugt wird.

Es ist eine Aufgabe der vorliegenden Erfindung, ein Verfahren der eingangs genannten Art anzugeben, mit dem eine sichere und zeitlich lückenlose Absicherung eines Gefahrenbereichs möglich ist.

Die Aufgabe wird durch ein Verfahren gemäß Anspruch 1 gelöst.

Bei der vorliegenden Erfindung wird ein im normalen Arbeitsbetrieb der Schutzvorrichtung aufgenommenes Objektbild als Testbild zum Überprüfen der Funktionssicherheit verwendet. Das Objektbild wird mit Hilfe nachfolgend beschriebener, bevorzugter Maßnahmen gezielt verändert, d.h. es wird mit Hilfe der Testeinrichtung dynamisiert. Diese Zwangsdynamisierung erfolgt determiniert, d.h. auf der Basis von zumindest theoretisch exakt bestimmbaren Zusammenhängen. Aufgrund dieser bekannten Zusammenhänge muß das dynamisierte Objektbild bei einer fehlerfrei funktionierenden Vorrichtung einer bekannten oder zumindest theoretisch exakt bestimmbaren Erwartungshaltung entsprechen. Andernfalls liegt ein Fehler der Vorrichtung vor. Die Erwartungshaltung ist rechnerisch aus der jeweiligen Dynamisierung des Objektbildes abgeleitet.

Die Testeinrichtung dynamisiert das Objektbild mittels einer ersten und einer zweiten Manipulation, wobei die erste und die zweite Manipulation verschieden voneinander sind und in einer definierten Beziehung zueinander stehen. Hier wird das Referenzbild also durch eine Manipulation (Dynamisierung) des Objektbildes erzeugt. Die beiden Manipulationen sind verschieden zueinander, sie stehen jedoch in einer definierten Beziehung zueinander. Infolgedessen sowie infolge der einheitlichen Ausgangsbasis, nämlich dem aufgenommenen Objektbild, lassen sich das Testbild und die Erwartungshaltung (Referenzbild) gezielt miteinander vergleichen. Bei einem fehlerfreien Betrieb des Bildsensors müssen das Testbild und die Erwartungshaltung identisch sein oder sich zumindest im Rahmen der definierten Beziehung entsprechen. Aufgrund der Tatsache, daß die beiden Manipulationen des Objektbildes verschieden voneinander sind, wirken sich etwaige Funktionsstörungen des Bildsensors bei der Erzeugung des Testbildes und der Erzeugung des Referenzbildes unterschiedlich aus, so daß der auftretende Fehler durch den Vergleich der beiden Bilder erkannt werden kann.

Bei der ersten Manipulation wird ein Strahlengang des Objektbildes physikalisch verändert. Hier wird das Objektbild auf seinem Weg zu dem Bildsensor verändert, ohne daß dabei in dem beobachteten Objektbereich selbst Maßnahmen oder Ereignisse erforderlich sind. Die Manipulation kann daher räumlich im Bereich des Bildsensors erfolgen. Infolge dessen kann die erfindungsgemäße Vorrichtung kompakt in einer den Bildsensor enthaltenden Einheit untergebracht sein. Dies vereinfacht die Installation und erschwert oder verhindert zudem ein bewußtes oder unbewußtes Außerkraftsetzen oder Verfälschen der Funktionsüberprüfung. Darüber hinaus erhält der Bildsensor hierbei ein reales, jedoch gezielt dynamisiertes Objektbild, so daß bei dieser Ausgestaltung der Erfindung der gesamte Signalpfad von der Frontoptik bis zur Bildverarbeitungseinheit des Systems überprüft werden kann. Ferner ist das erfindungsgemäße Verfahren dieser Ausgestaltung unabhängig von der konkreten technischen Realisierung des Kamerasystems, das den zu überprüfenden Bildsensor enthält.

Bei der zweiten Manipulation werden Bilddaten des Objektbildes rechnerisch mittels eines Bildverarbeitungsalgorithmus verändert. Die Maßnahme besitzt den Vorteil, daß sie sehr kostengünstig realisiert werden kann. Zudem bietet eine Manipulation des Objektbildes mit Hilfe eines Bildverarbeitungsalgorithmus eine sehr große Flexibilität, so daß das erfindungsgemäße Verfahren sehr einfach an wechselnde Anforderungen und/oder Funktionstests angepaßt werden kann. Schließlich beruht eine Realisierung mittels eines Bildverarbeitungsalgorithmus auf einem technisch vollkommen anderen Prinzip als eine Manipulation mit physikalischen Mitteln. Aufgrund dieser unterschiedlichen Ansätze ist die Wahrscheinlichkeit, daß sich ein auftretender Fehler in beiden Manipulationen identisch auswirkt, sehr stark verringert.

Wie anhand der nachfolgenden bevorzugten Ausgestaltungen der Erfindung erläutert wird, kann die ursprüngliche Bildinformation des Objektbildes zerstörungsfrei erhalten bleiben, so daß die Schutzvorrichtung auch während der Funktionsüberprüfung nicht blind ist. Infolgedessen ist eine zeitlich lückenlose Absicherung des Gefahrenbereichs möglich.

Die Erfindung besitzt darüber hinaus den Vorteil, daß mit dem Vergleich implizit der gesamte Signalpfad des Objektbildes getestet werden kann. Dadurch werden im selben Testdurchlauf nicht nur Fehler in bzw. an dem Bildsensor der Bildaufnahmeeinheit, sondern darüber hinaus auch Fehler in anderen Bauteilen des Signalpfades, bspw. einem A/D-Wandler, erkannt. Ferner kann die Überprüfung an dem realen Objektbild stattfinden. Im Gegensatz zum Stand der Technik wird kein künstliches, von der eigentlichen Beobachtungsaufgabe abweichendes Testszenario erzeugt. Dadurch wird sichergestellt, daß die Bildaufnahmeeinheit gerade im Hinblick auf die ihr zugeordnete Beobachtungsaufgabe überprüft wird. Bei bisher bekannten Verfahren besteht demgegenüber zumindest grundsätzlich die Gefahr, daß ein im realen Betrieb auftretender Fehler unter den "Laborbedingungen" mit einem künstlichen Testbild nicht erkannt wird. Das erfindungsgemäße Verfahren besitzt daher eine höhere Fehlersicherheit im Hinblick auf die eigentliche Verwendung der Bildaufnahmeeinheit. In einer bevorzugten Ausgestaltung der erfindungsgemäßen Schutzvorrichtung weist die Testeinrichtung Mittel auf, um das dem Bildsensor zugeführte Objektbild in Bezug auf definierte Bildpunkte zu dynamisieren. Dementsprechend wird das Objektbild bei dem erfindungsgemäßen Verfahren bevorzugt in Bezug auf definierte Bildpunkte dynamisiert.

Aufgrund dieser Maßnahmen ist es möglich, insbesondere den Bildsensor der Bildaufnahmeeinheit gezielt auf einzelne Fehler hin zu überprüfen. Mögliche Fehler des Bildsensors sind vor allem sogenannte Stuck-at-Fehler in einzelnen Bildpunkten, bei denen der entsprechende Bildpunkt sein Ausgangssignal unabhängig von dem aufgenommenen Objektbild nicht mehr verändert. Eine weitere Fehlerquelle sind statische oder dynamische Kopplungen zwischen einzelnen Bildpunkten, die sowohl einzeln als auch cluster- oder zeilen- bzw. spaltenweise auftreten können. In diesem Fall ist das Ausgangssignal eines Bildpunktes von einem anderen Bildpunkt fehlerhaft beeinflußt. Des weiteren können Adressierungsfehler auftreten, d.h. es wird fälschlicherweise die Bildinformation eines ersten Bildpunktes ausgelesen, obwohl von der Auswerteeinheit ein zweiter, anderer Bildpunkt adressiert worden ist. Schließlich können Fehler dadurch auftreten, daß einzelne Bildpunkte durch äußere Einflüsse, wie beispielsweise UV-Strahlung oder elektrische Störungen in ihrem Informationsgehalt geändert werden.

In der bevorzugten Ausgestaltung der Erfindung kann jeder dieser denkbaren Fehler sehr zuverlässig und in Echtzeit erkannt werden. Dies ist besonders vorteilhaft im Hinblick auf die Anforderungen der höheren Sicherheitskategorien der europäischen Norm EN 954-1.

In einer Ausgestaltung der Erfindung weist die Testeinrichtung Mittel zum Dynamisieren auf, die den Bildsensor und das Objektbild relativ zueinander verschieben. Dementsprechend werden der Bildsensor und das Objektbild bei dieser Ausgestaltung relativ zueinander verschoben.

Mit Hilfe dieser Maßnahme ist es auf einfache Weise möglich, ein im Arbeitsbetrieb der Schutzvorrichtung aufgenommenes Objektbild gezielt und im Hinblick auf definierte Bildpunkte zu dynamisieren. Dabei besitzt diese Maßnahme den Vorteil, daß das Objektbild trotz seiner Dynamisierung im wesentlichen unverändert erhalten bleibt, was die nachfolgende Bildauswertung vereinfacht. Die Funktionssicherheit der Schutzvorrichtung kann daher mit vergleichsweise geringen Modifikationen in der normalen Datenverarbeitung für das Objektbild überprüft werden.

In einer weiteren Ausgestaltung der Erfindung werden der Bildsensor und das Objektbild pixelweise zueinander verschoben.

Diese Maßnahme besitzt wiederum den Vorteil, daß auftretende Fehler des Bildsensors im Hinblick auf einzelne Bildpunkte feststellbar sind. Infolgedessen können mit einer Schutzvorrichtung dieser Ausgestaltung die Anforderungen der Sicherheitskategorien 3 und 4 der bereits genannten europäischen Norm besonders gut erfüllt werden.

In einer weiteren Ausgestaltung der zuvor genannten Maßnahme wird der Strahlengang des Objektbildes durch Einbringen eines optischen Elements verändert.

Das Einbringen eines optischen Elements in den Strahlengang des Objektbildes stellt eine technisch sehr einfache Möglichkeit zur Durchführung der ersten Manipulation dar. Zudem können mittels verschiedener optischer Elemente alternativ oder in Kombination zueinander verschiedene erste Manipulationen erzeugt werden, um auf diese Weise verschiedene Eigenschaften des Bildsensors bzw. der Bildaufnahmeeinheit gezielt zu überprüfen. Zudem besitzt ein optisches Element den Vorteil, daß seine physikalischen Eigenschaften, die die Veränderung des Strahlengangs bewirken, robust gegenüber äußeren Umwelteinflüssen oder Alterungsprozessen sind. Infolge dessen ist die erfindungsgemäße Vorrichtung dieser Ausgestaltung besonders robust.

In einer weiteren Ausgestaltung wird der Strahlengang des Objektbildes durch Variieren eines optischen Elements verändert.

Die Variation kann bspw. durch Verstellen einer Blendenöffnung erzeugt werden. Ein weiteres Beispiel ist, ein rotierendes optisches Element im Strahlengang des Objektbildes anzuordnen, wobei die Rotation die genannte Variation bewirkt. Die Maßnahme besitzt den Vorteil, daß eine mechanische Bewegung zum Ein- und Ausführen des optischen Elements in bzw. aus dem Strahlengang entfallen kann, was den Konstruktionsaufwand vereinfacht.

Eine Blende ist dabei ganz allgemein der begrenzende Teil eines optischen Systems. Durch die Begrenzung werden im Randbereich Beugungseffekte hervorgerufen, die sich in dem hinter der Blende sichtbaren Bild auswirken. Technisch gesprochen wirkt eine Blende wie ein räumlicher Tiefpaß, und es kommt im Bereich hinter der Blende zu einer Aufweitung des Objektbildes mit einer in etwa $\sin^2(x)/x$-förmigen Intensitätsverteilung. Die Verwendung einer Blende besitzt den Vorteil, daß die Übertragungsfunktion in Abhängigkeit von den geometrischen Abmessungen exakt bekannt ist, so daß die für den Vergleich erforderliche definierte Beziehung besonders einfach zu bestimmen ist.

In einer weiteren Ausgestaltung der zuvor genannten Maßnahmen wird der Strahlengang mit Hilfe eines Beugungsgitters verändert.

Ein Beugungsgitter ist eine gitterförmige Struktur, die nach den an sich bekannten Gesetzen der Optik aufgrund von Beugungseffekten Interferenzen der hindurchtretenden Wellenfronten hervorruft. Diese Interferenzen führen zu einer sichtbaren und daher einfach auswertbaren Veränderung des aufgenommenen Objektbildes. Zudem besitzt ein Beugungsgitter den Vorteil, daß die Veränderungen anhand der geometrischen Verhältnisse sowie der Wellenlängen der Lichtstrahlen genau bestimmbar sind. Dies erleichtert den Vergleich des Testbildes mit dem Referenzbild.

In einer weiteren Ausgestaltung der zuvor genannten Maßnahme wird das Beugungsgitter elektronisch aktiviert.

Das Einbringen eines Beugungsgitters in den Strahlengang des Objektbildes muß nicht zwangsläufig mittels einer mechanischen Bewegung erfolgen. Statt dessen wird das Beugungsgitter bevorzugt mittels einer lichtdurchlässigen Scheibe realisiert, in der elektronisch aktivierbare Flüssigkristalle angeordnet sind. Die Verwendung von solchen Flüssigkristallen ist bspw. von Anzeigen und Bildschirmen unter der Bezeichnung LCD (Liquid Crystal Displays) bekannt. Die Maßnahme besitzt den Vorteil, daß das Beugungsgitter sehr schnell aktiviert und deaktiviert werden kann. Zudem entfällt der konstruktive Aufwand, der für eine mechanische Bewegung erforderlich ist.

In einer weiteren Ausgestaltung der zuvor genannten Maßnahme beinhaltet der Bildverarbeitungsalgorithmus eine rechnerische Nachbildung der ersten Manipulation.

Diese Maßnahme besitzt den Vorteil, daß der Vergleich zwischen dem Referenzbild und dem Testbild besonders einfach durchgeführt werden kann, da die beiden Bilder trotz der unterschiedlichen Manipulationen identisch sein müssen, wenn der Bildsensor bzw. die Bildaufnahmeeinheit insgesamt fehlerfrei funktionieren. Die Maßnahme ist besonders vorteilhaft, wenn die rechnerische Nachbildung der ersten Manipulation exakt bekannt ist, wie dies insbesondere bei der Verwendung eines Beugungsgitters bzw. einer Blendenöffnung der Fall ist.

Es versteht sich, daß die vorstehend genannten und die nach-stehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine schematische Draufsicht auf eine Schutzvorrichtung;

Fig. 2 eine Bildaufnahmeeinheit mit einer Vorrichtung nach dem neuen Verfahren;

Fig. 3 ein schematisch dargestelltes Objektbild;

Fig. 4 ein Testbild, das durch eine erste Manipulation aus dem Objektbild gemäß Fig. 3 erzeugt wird; und

Fig. 5 ein elektronisch aktivierbares Beugungsgitter.

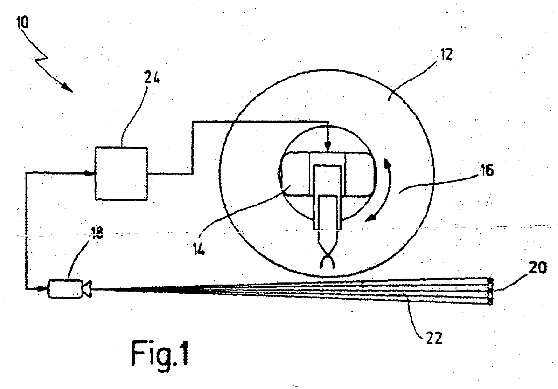

In Fig. 1 ist eine Schutzvorrichtung in ihrer Gesamtheit mit der Bezugsziffer 10 bezeichnet.

Die Schutzvorrichtung 10 dient zum Absichern eines Gefahrenbereichs 12, der sich dadurch ergibt, daß eine automatisiert arbeitende Maschine 14 in Richtung des Pfeils 16 beweglich ist.

Mit der Bezugsziffer 18 ist eine Bildaufnahmeeinheit bezeichnet, deren Aufbau anhand der nachfolgenden Ausführungsbeispiele näher erläutert wird. Die Bildaufnahmeeinheit 18 nimmt das Abbild eines kooperativen Ziels 20 auf. Sie bildet damit eine virtuelle Barriere 22, die den Gefahrenbereich 12 absichert, da ein Durchbrechen der virtuellen Barriere 22 vor dem Hintergrund des kooperativen Ziels 20 leicht erkannt werden kann.

Die Bildaufnahmeeinheit 18 ist mit einer Auswerte- und Steuereinheit 24 verbunden, die bei einem Durchbrechen der virtuellen Barriere 22 eine Sicherheitsfunktion auslöst. Die Sicherheitsfunktion beinhaltet beispielsweise, daß die Auswerte- und Steuereinheit 24 die Maschine 14 abschaltet oder anderweitig in einen gefahrlosen Zustand versetzt.

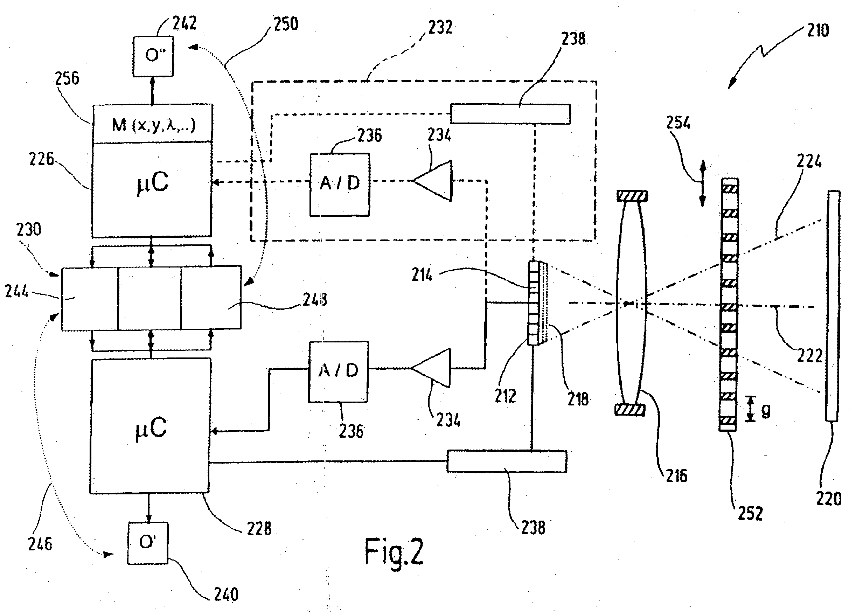

In Fig. 2 ist eine Bildaufnahmeeinheit mit einem erfindungsgemäßen Verfahren in ihrer Gesamtheit mit der Bezugsziffer 210 bezeichnet.

Die Bildaufnahmeeinheit 210 besitzt einen Bildsensor 212 mit einer Vielzahl von Bildpunkten 214. Der Bildsensor 212 nimmt über eine Aufnahmeoptik 216 das Objektbild 218 eines Objektes 220 auf. Das Objekt 220 befindet sich im Beobachtungsbereich der Bildaufnahmeeinheit 210. Mit dem Bezugszeichen 222 ist die optische Achse der Aufnahmeoptik 216 bezeichnet, und mit dem Bezugszeichen 224 ist der Strahlengang für das Objektbild 218 durch die Aufnahmeoptik 216 angedeutet.

Die Bildaufnahmeeinheit 210 ist aus Gründen der Fehlersicherheit weitgehend zweikanalig redundant aufgebaut, wobei in Fig. 2 stellvertretend für jeden der beiden Bildverarbeitungskanäle jeweils ein Mikrocontroller 226, 228 dargestellt ist. Die beiden Mikrocontroller 226, 228 führen im Arbeitsbetrieb der Bildaufnahmeeinheit 210 redundant zueinander eine Bildverarbeitung durch, deren Ergebnisse in einer nachfolgenden Schaltungseinheit (hier nicht dargestellt) weiter verwendet werden. Bevorzugt sind die Ergebnisse einer nachfolgenden Auswerte- und Steuereinheit zugeführt, die in Abhängigkeit davon eine Sicherheitsfunktion, wie bspw. eine Notabschaltung einer automatisiert arbeitenden Maschine, auslöst.

Die beiden Mikrocontroller 226, 228 sind in dem vorliegenden Ausführungsbeispiel über ein sogenanntes Dual Ported RAM 230 verbunden. Hierbei handelt es sich um einen Speicher, der von beiden Mikrocontrollern 226, 228 sowohl gelesen als auch beschrieben werden kann. Über das Dual Ported RAM 230 können die beiden Mikrocontroller 226, 228 ihre jeweiligen Verarbeitungsergebnisse austauschen und miteinander vergleichen. Auf diese Weise können sich die beiden Mikrocontroller 226, 228 im Arbeitsbetrieb der Bildaufnahmeeinheit 210 gegenseitig auf fehlerfreie Funktion hin überwachen.

Gemäß einer bevorzugten Ausführung der Erfindung erhält jeder der beiden Mikrocontroller 226, 228 die Bilddaten eines aufgenommenen Objektbildes 218 über einen eigenen Signalpfad. Dies ist jedoch nicht unbedingt erforderlich, weshalb der Signalpfad 232 für den Mikrocontroller 226 in Fig. 2 in gestrichelten Linien dargestellt ist.

Die beiden in dem vorliegenden Ausführungsbeispiel redundant zueinander aufgebauten Signalpfade besitzen jeweils einen Verstärker 234, über den die Bilddaten eines aufgenommen Objektbildes 218 zu einem Analog-Digital-Wandler 236 geführt werden. Dort werden die Bilddaten des Objektbildes 218 digitalisiert und anschließend den beiden Mikrocontrollern 226, 228 zugeführt. Die Ansteuerung des Bildsensors 212 erfolgt für jeden Signalpfad über eine eigene Adressierungseinheit 238, die von dem jeweils zugeordneten Mikrocontroller 226, 228 gesteuert wird. Die Bauelemente 234, 236, 238 der beiden Signalpfade sind hier diskret dargestellt. Sie können jedoch alternativ hierzu auch in einem gemeinsamen Schaltkreis integriert sein, der in einer bevorzugten Ausführung zusätzlich sogar den Bildsensor 212 beinhaltet.

Mit den Bezugszeichen 240 und 242 ist jeweils ein Speicher bezeichnet. Der Speicher 240 ist dem Mikrocontroller 228 zugeordnet und dient zum Abspeichern eines Testbildes O', das aus dem Objektbild 218 mit Hilfe der nachfolgend beschriebenen ersten Manipulation erzeugt wird. Der Speicher 242 ist dem Mikrocontroller 226 zugeordnet und dient zum Abspeichern eines Referenzbildes O' ', das mit Hilfe der zweiten Manipulation aus dem Objektbild 218 erzeugt wird.

Das Dual Ported RAM 230 besitzt in der hier dargestellten Ausführungsform einen ersten Speicherbereich 244, in dem der Mikrocontroller 226 das Referenzbild O" ablegen kann, damit dieses von dem Mikrocontroller 228 mit dem Testbild O' verglichen werden kann. Dieser Vergleich ist in Fig. 2 durch den punktierten Pfeil 246 angedeutet. Des weiteren besitzt das Dual Ported RAM 230 einen zweiten Speicherbereich 248, in dem der Mikrocontroller 228 das Testbild O' ablegt, damit der Mikrocontroller 226 dieses mit dem Referenzbild O'' vergleichen kann. Dieser Vergleich ist in Fig. 2 mit dem punktierten Pfeil 250 angedeutet. Aufgrund dieser bevorzugten Ausführung der Erfindung findet somit ein zweifacher, redundanter Vergleich des Testbildes O' und des Referenzbildes O" statt.

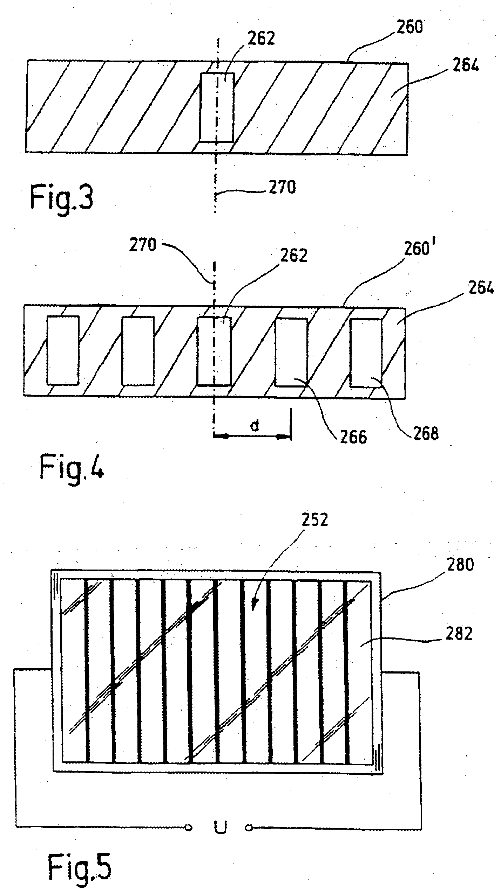

Zum Erzeugen des Testbildes O' weist die Bildaufnahmeeinheit 210 ein optisches Element 252 auf, das in Richtung des Pfeils 254 in den Strahlengang 224 für das Objektbild 218 eingebracht werden kann. Das optische Element 252 ist in diesem Ausführungsbeispiel ein Beugungsgitter, dessen Auswirkung nachfolgend anhand der Fig. 3 und 4 erläutert wird. In einem alternativen Ausführungsbeispiel ist das optische Element 252 abweichend von Fig. 2 eine Blende, insbesondere eine Blende mit variabler Blendenöffnung. Darüber hinaus können für die Durchführung des erfindungsgemäßen Verfahrens auch beliebige andere optische Elemente verwendet werden, deren Einfluß auf das Objektbild 218 bekannt ist oder zumindest hinreichend genau bestimmbar ist. Des weiteren ist das optische Element 252 hier auf der Objektseite in den Strahlengang 224 des Objektbildes 218 eingebracht. Alternativ hierzu kann das optische Element 252 jedoch auch im Bereich des Bildsensors 212, d.h. seonsorseitig, in den Strahlengang 224 des Objektbildes 218 eingebracht werden.

Zum Erzeugen des Referenzbildes O' ' weist der Mikrocontroller 226 eine Bildverarbeitungseinheit 256 auf, die einen Bildverarbeitungsalgorithmus M beinhaltet. Gemäß dem hier bevorzugten Ausführungsbeispiel der Erfindung beinhaltet der Bildverarbeitungsalgorithmus M eine rechnerische Nachbildung der ersten Manipulation des Objektbildes 218 anhand des Beugungsgitters 252. Die rechnerische Nachbildung ist in Fig. 2 anhand der Modulationsübertragungsfunktion M (x, y, λ, ...) angedeutet, wobei x und y die Koordinaten der einzelnen Bildpunkte des Bildsensors 212 und λ die Wellenlänge des einfallenden Lichts bezeichnen.

Zum Erzeugen des Referenzbildes O'' befindet sich das Beugungsgitter 252 nicht im Strahlengang 224. Das Objektbild 218 ist somit eine im wesentlichen unverfälschte Abbildung des Objekts 220. Die Bilddaten des auf diese Weise aufgenommenen Objektbildes 218 werden über den Bildverarbeitungsalgorithmus so verändert, daß die Auswirkung des Beugungsgitters 252 rechnerisch nachgebildet ist. Bei einem fehlerfreien Funktionieren der Bildaufnahmeeinheit 210, insbesondere des Bildsensors 212, muß dieses rechnerisch gebildete Referenzbild O'' dem mit Hilfe des Beugungsgitters 252 erzeugten Testbild O' entsprechen. Ist dies nicht der Fall, liegt ein Fehler des Bildsensors 212 und/oder ein Fehler in einem der Signalpfade bzw. in den Mikrocontrollern 226, 228 vor.

Fig. 3 und 4 zeigen die Auswirkung des Beugungsgitters 252 auf das Objektbild 218. In Fig. 3 ist ein unverändertes Objektbild mit der Bezugsziffer 260 bezeichnet. Das Objektbild 260 besteht hier beispielhaft aus einem hellen, balkenförmigen Bereich 262, der von einem dunkleren Bereich 264 umgeben ist.

Durch das Einbringen des Beugungsgitters 252 in den Strahlengang 224 werden Interferenzen erzeugt, die zur Folge haben, daß sich in definierten Abständen d rechts und links von dem helleren Bereich 262 weitere hellere Bereiche 266, 268 bilden. Die Intensität der weiteren Bereiche 266, 268 ist dabei geringer als die Intensität des helleren Bereichs 262. Für den Winkel, unter dem die weitere helleren Bereiche 266, 268 bezogen auf die Mittelachse 270 auftreten, gilt folgender Zusammenhang:

$$\sin \alpha = n \cdot \lambda / g$$

wobei α den Ablenkwinkel, λ die Wellenlänge, n die Ordnung des betrachteten Bereichs und g die Gitterkonstante des Beugungsgitters bezeichnen.

Durch eine Verwendung von Beugungsgittern mit unterschiedlichen Gitterkonstanten g lassen sich daher leicht verschiedene erste Manipulationen des Objektbildes 260 erzeugen.

Fig. 5 zeigt ein Flüssigkristallelement 280 mit einer an sich vollständig lichtdurchlässigen Fläche 282, in der einzelne Flüssigkristalle durch Anlegen einer Spannung U so aktiviert werden können, daß sie ein nur teilweise lichtdurchlässiges Beugungsgitter 252 bilden. Durch Anlegen verschiedener Steuerspannungen U können dabei Beugungsgitter 252 mit unterschiedlichen Gitterkonstanten g und/oder unterschiedlichen Gitterverläufen erzeugt werden. Bei der Verwendung des Flüssigkristallelements 280 kann daher eine mechanische Bewegung zum Ein- und Ausführen des Beugungsgitters 252 in den Strahlengang 224 entfallen.

In einem weiteren Ausführungsbeispiel der Erfindung rotiert das Beugungsgitter 252 um die optische Achse 222 der Bildaufnahmeeinheit 210. Hierdurch wird eine definierte Variation des Strahlengangs 224 für das Objektbild 218 hervorgerufen. Diese Variation kann aufgrund ihrer definierten Eigenschaften mit Hilfe der zweiten Manipulation wiederum rechnerisch nachgebildet werden.

**Patentansprüche**

1. Verfahren zum Überprüfen der Funktionssicherheit eines Bildsensors (32; 158: 212), der eine Vielzahl von lichtempfindlichen Bildpunkten (34, 78; 214) beinhaltet, wobei der Bildsensor (32; 158; 212) im Arbeitsbetrieb ein Objektbild (50; 218) aufnimmt, wobei dem Bildsensor (32; 158; 212) zum Überprüfen der Funktionssicherheit ein definiertes Testbild (O') zugeführt wird, wobei das von dem Bildsensor (32; 158; 212) aufgenommene Testbild (O') mit einer definierten Erwartungshaltung (46; O'') verglichen wird, und wobei das Objektbild (50; 218) mit Hilfe einer Testeinrichtung (42; ) gezielt dynamisiert wird und das dynamisierte Objektbild (O') als Testbild verwendet wird, **dadurch gekennzeichnet, daß** das Objektbild (218) mittels einer ersten Manipulation (254) gezielt dynamisiert wird und daß die definierte Erwartungshaltung (O'') mittels einer zweiten Manipulation (256) aus dem Objektbild (218) erzeugt wird, wobei die erste (254) und die zweite (256) Manipulation verschieden voneinander sind und in einer definierten Beziehung zueinander stehen, wobei bei der ersten Manipulation ein Strahlengang (224) des Objektbildes (218) physikalisch verändert wird, und wobei bei der zweiten Manipulation (256) Bilddaten des Objektbildes (212) rechnerisch mittels eines Bildverarbeitungsalgorithmus (M) verändert werden.

2. Verfahren nach Anspruch 91, **dadurch gekennzeichnet, daß** der Bildsensor (32) und das Objektbild (50) relativ zueinander verschoben werden.

3. Verfahren nach Anspruch 1 oder 2, **dadurch gekennzeichnet, daß** der Bildsensor (32) und das Objektbild (50) pixelweise zueinander verschoben werden.

4. Verfahren nach Anspruch 1, **dadurch gekennzeichnet, daß** bei der ersten Manipulation ein Strahlengang (224) des Objektbildes (218) durch Einbringen eines optischen Elements (252) und/oder durch Variieren eines optischen Elements (252) physikalisch verändert wird.

5. Verfahren nach Anspruch 1, **dadurch gekennzeichnet, daß** der Bildverarbeitungsalgorithmus (M) eine rechnerische Nachbildung der ersten Manipulation (254) beinhaltet.

## Claims

1. A method of checking the functional reliability of an image sensor (32; 158; 212) which includes a plurality of light-sensitive image points (34, 78; 214), wherein said image sensor (32; 158; 212) records an object image (50; 218) during operation, wherein a defined test image (O') is supplied to the image sensor (32; 158; 212) for checking the functional reliability, wherein the test image (O') recorded by the image sensor (32; 158; 212) is compared with a defined expectation (46; O"), and wherein the object image (50; 218) is specifically made dynamic by means of a testing device (42), and the dynamized object image (O') is used as the test image, **characterized in that** the object image (218) is specifically made dynamic by means of a first manipulation (254), and the defined expectation (O") is generated from the object image (218) by means of a second manipulation (256), the first (254) and the second (256) manipulation being different from each other and having a defined relationship to each other, wherein an optical path (224) of the object image (218) physically is varied in the first manipulation, and wherein image data from the object image (212) is changed by computation by means of an image processing algorithm (M) in the second manipulation (256).

2. The method of claim 1, **characterized in that** the image sensor (32) and the object image (50) are displaced relative to each other.

3. The method of claim 1 or 2, **characterized in that** the image sensor (32) and the object image (50) are displaced pixel by pixel in relation to each other.

4. The method of claim 1, **characterized in that** an optical path (224) of the object image (218) is varied physically in the first manipulation by introducing an optical element (252) and/or by varying an optical element (252).

5. The method of claim 1, **characterized in that** the image processing algorithm (M) includes a computerized simulation of the first manipulation (254).

## Revendications

1. Procédé de vérification du bon fonctionnement d'un capteur vidéo (32 ; 158 ; 212) qui comporte une pluralité de points d'image (34, 78 ; 214) photosensibles, dans lequel le capteur vidéo (32 ; 158 ; 212) enregistre en mode de travail une image objet (50 ; 218), dans lequel une image test (O') définie est acheminée vers le capteur vidéo (32 ; 158 ; 212) pour la vérification du bon fonctionnement, dans lequel l'image test (O') enregistrée par le capteur vidéo (32 ; 158 ; 212) est comparée à une position escomptée (46 ; O") définie, et dans lequel l'image objet (50 ; 218) est dynamisée de manière ciblée au moyen d'un dispositif de test (42 ;) et l'image objet (O')·dynamisée est utilisée comme image test, **caractérisé en ce que** l'image objet (218) est dynamisée de manière ciblée au moyen d'une première manipulation (254) et **en ce que** la position escomptée (O") définie est générée à partir de l'image objet (218) au moyen d'une seconde manipulation (256), dans lequel la première (254) et la seconde (256) manipulations sont différentes l'une de l'autre et sont en rapport l'une avec l'autre selon une relation définie, dans lequel lors de la première manipulation, un faisceau de rayonnement (224) de l'image objet (218) est modifié physiquement, et dans lequel lors de la seconde manipulation (256) des données de l'image objet (212) sont modifiées par calcul au moyen d'un algorithme de traitement d'image (M).

2. Procédé selon la revendication 1, **caractérisé en ce que** le capteur vidéo (32) et l'image objet (50) sont déplacés l'un par rapport à l'autre.

3. Procédé selon la revendication 1 ou 2, **caractérisé en ce que** le capteur vidéo (32) et l'image objet (50) sont déplacés par pixels l'un par rapport à l'autre.

4. Procédé selon la revendication 1, **caractérisé en ce que** lors de la première manipulation, un faisceau de rayonnement (224) de l'image objet (218) est modifié physiquement, moyennant l'introduction d'un élément optique (252) et/ou par une variation d'un élément optique (252).

5. Procédé selon la revendication 1, **caractérisé en ce que** l'algorithme de traitement d'image (M) contient une simulation de la première manipulation (254).

Fig.1

Fig.2

EP 1 269 762 B2

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0902402 A2

- DE 29520980 U1